# EUROPEAN PATENT APPLICATION

(11) **EP 4 141 059 A1**
(43) Date of publication of application: **01.03.2023**
(21) Application number: 21194000.2
(22) Date of filing: 31.08.2021
(51) Int. Cl.: C08K 3/32, C08K 5/00, C09K 21/12, C07F 9/30

(54) **DIORGANYLPHOSPHINIC SALTS HAVING EXCEPTIONAL SURFACE STRUCTURE**

(71) Applicant: Clariant International Ltd, 4132 Muttenz (CH)
(72) Inventor: BAUER, Harald, 50170 Kerpen (DE); SICKEN, Martin, 51149 Köln (DE); OSTEROD, Frank, 50374 Erftstadt (DE)
(74) Representative: Mikulecky, Klaus

(57) **Abstract**

The present invention provides diorganylphosphinic salts having a ratio of tamped density to bulk density of 1.19 to 3.

## Description

The invention relates to diorganylphosphinic salts having exceptional surface structure, to a process for production thereof and to use thereof.

Diorganylphosphinic salts, especially the dialkylphosphinic salts (also called dialkylphosphinates), are increasingly being used as flame retardants for various plastics in halogen-free flame retardant mixtures.

For electronic circuits, there is a great need for flame retardancy so that they cannot ignite in operation, in the event of faulty switching or improper handling. The conductor tracks for the conduction of current are at particular risk here.

In the case of conductor tracks, what is called the skin effect should be noted. The basis of the skin effect is the fact that, at high frequencies, the current density in a conductor is no longer distributed uniformly over the cross section because the current is displaced toward the surface of the conductor.

This effect influences the conduction of the electrical signal via the roughness of the conductor track. The conductor surface should be smooth since rough surfaces constitute a longer pathway and hence greater resistance for the current. The path loss of an electrical signal, which is important in this context, is characterized by the sum total of dielectric loss, conduction loss and radiation loss; these increase when the signal frequency is increased in the high-frequency range. Surface roughness can attenuate the electrical signal and impair the reliability thereof (JP-A-2014/098087).

There is therefore a search for halogen-free flame retardants having an exceptional surface structure in order to minimize the surface roughness of the material of the conductor tracks or the conductor tracks themselves, in order that the electrical signal is transported and gets through with minimum loss and disruption.

The "exceptional surface structure" referred to here as such relates to a particular ratio of tamped density to bulk density for the corresponding substances.

The diorganylphosphinic salts according to the invention can be used in various materials and lead, for example in resins, to a specific smooth resin surface.

It has been found that, surprisingly, the diorganylphosphinic salts according to the invention that have an exceptional surface structure lead to low surface roughness, for instance in flame retardant resins, when they are themselves used as flame retardants in flame retardant resins or with other substances in/as flame retardant mixtures.

The invention therefore also relates to flame retardant resins and other polymers in which the diorganylphosphinic salts according to the invention that have an exceptional surface structure are used.

The exceptional surface structure already mentioned here can be characterized by the ratio of tamped density to bulk density. This ratio is also referred to as the Hausner factor.

It is therefore an object of the present invention to provide diorganylphosphinic salts having an exceptional surface structure.

This object is achieved by diorganylphosphinic salts having a ratio of tamped density to bulk density of 1.19 to 3.

The diorganylphosphinic salts preferably have a ratio of tamped density to bulk density of 1.2 to 2.

The diorganylphosphinic salts more preferably have a ratio of tamped density to bulk density of 1.25 to 1.5.

The diorganylphosphinic salts preferably conform to the formula (I) 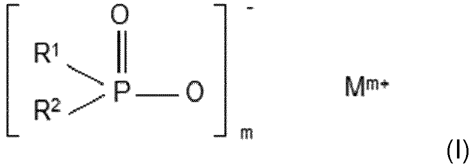 in which
- R¹ and R²: are the same or different and are C₁-C₁₈-alkyl in linear, branched or cyclic form, C₆-C₁₈-aryl, C₇-C₁₈-arylalkyl, and/or C₇-C₁₈-alkylaryl,
- M: is Mg, Ca, Al, Sb, Sn, Ge, Ti, Zn, Fe, Zr, Ce, Bi, Sr, Mn, Li, Na, K, a protonated nitrogen base and/or a lanthanoid;
- m: is 1 to 4;
- n: is 1 to 4.

Preferably, in formula (I), R¹, R² are the same or different and are methyl, ethyl, n-propyl, isopropyl, n-butyl, tert-butyl, n-pentyl, hexyl and/or phenyl.

The diorganylphosphinic salts preferably further comprise telomers, where the telomers are ethylbutylphosphinic acid, dibutylphosphinic acid, ethylhexylphosphinic acid, butylhexylphosphinic acid, ethyloctylphosphinic acid, sec-butylethylphosphinic acid, (1-ethylbutyl)butylphosphinic acid, ethyl-(1-methylpentyl)phosphinic acid, di-sec-butylphosphinic acid (di-1-methylpropylphosphinic acid), propyl(hexyl)phosphinic acid, dihexylphosphinic acid, hexyl(nonyl)phosphinic acid, dinonylphosphinic acid, and/or salts thereof with the metals Mg, Ca, Al, Sb, Sn, Ge, Ti, Zn, Fe, Zr, Ce, Bi, Sr, Mn, Li, Na, K and/or the lanthanoids, and the telomers are different from the diorganylphosphinic salts of the formula (I).

The diorganylphosphinic salts preferably comprise, as a further component, iron in the form of an iron-containing substance, where the amount of iron-containing substance is 0.0001 % to 10% by weight of the total mixture, and the iron-containing substance is iron(ll) and/or iron(III) phosphite, phosphate, diethylphosphinate, dipropylphosphinate, n-butylethylphosphinate, sec-butylethylphosphinate, hexylethylphosphinate, dibutylphosphinate, monoethylphosphinate, monopropylphosphinate, monobutylphosphinate, mono-n-butylphosphinate, mono-sec-butylphosphinate, monohexylphosphinate, monooctylphosphinate, ethylphosphonate, propylphosphonate, n-butylphosphonate, sec-butylphosphonate, hexylphosphonate and/or octylphosphonate.

The diorganylphosphinic salts preferably comprise, as a further component, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates and/or melon polyphosphates; or melamine condensation products such as melam, melem and/or melon; or oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide and/or guanidine; or nitrogen-containing phosphates of the formula (NH₄)_{y}H_{3-y}PO₄ or (NH₄PO₃)_{z} with y = 1 to 3 and z = 1 to 10 000; or aluminium phosphites; silicates, carbonates, monoalkylphosphinates, monoarylphosphinates, zeolites, silicas, ceramic powder, zinc compounds, for example zinc borate, alkali metal carbonate (potassium carbonate), zinc carbonate, zinc stannate, zinc hydroxystannate, zinc phosphate, zinc sulfide, zinc oxide, zinc hydroxide, tin oxide hydrate, basic zinc silicate, zinc molybdate; magnesium hydroxide, hydrotalcite, magnesium carbonate, calcium magnesium carbonate; salts of ethylphosphonic acid, of propylphosphonic acid, of butylphosphonic acid, of n-butylphosphonic acid, of sec-butylphosphonic acid, of hexylphosphonic acid and/or of octylphosphonic acid, where the amount thereof is 1% to 40% by weight of the overall mixture.

Preferably, the diorganylphosphinic salts have
- a median particle size d50 of 0.1 to 30 µm, measured by laser diffraction,
- a particle size d₉₅ of 0.1 to 50 µm, measured by laser diffraction,
- a particle size d_{99.5} of 0.5 to 100 µm, measured by laser diffraction,
- a bulk density of 50 to 600 g/l,
- a tamped density of 100 g/l to 800 g/l,
- an angle of repose of 5 to 50 degrees,
- a BET surface area of 1 to 50 m²/g,
- L color values of 85 to 99.9,
- a color values of -4 to +9 and/or
- b color values of -2 to +6.

The invention also relates to the use of diorganylphosphinic salts according to at least one of Claims 1 to 9 for further syntheses, as binder, as crosslinker or accelerator in the curing of epoxy resins, polyurethanes and unsaturated polyester resins, as polymer stabilizers, as crop protection agents, as sequestrants, as mineral oil additive, as anticorrosive, in washing and cleaning composition applications and in electronics applications; as or in flame retardants for clearcoats and intumescent coatings, as flame retardants for wood and other cellulose-containing products, as reactive and/or nonreactive flame retardant for polymers, for production of flame-retardant adhesives, for production of flame-retardant polymer moulding compounds, for production of flame-retardant polymer mouldings, films, filaments and/or fibres, and/or for imparting flame retardancy to polyester and pure cellulose and cellulose blend fabrics by impregnation, and in or for solder resists.

The present invention especially relates to the use of diorganylphosphinic salts according to one or more of Claims 1 to 9 as solder resist.

The invention also encompasses flame-retardant thermoplastic or thermoset polymer moulding compounds or polymer mouldings, films, filaments and/or fibres containing 0.5% to 45% by weight of diorganylphosphinic salts according to one or more of Claims 1 to 9, 0.5% to 95% by weight of thermoplastic or thermoset polymer or mixtures thereof, 0% to 55% by weight of additives and 0% to 55% by weight of filler or reinforcing materials, where the sum total of the components is 100% by weight.

Preferably, the aforementioned polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type, and/or thermoset polymers of the unsaturated polyester or epoxy resin type.

The invention also relates to flame-retardant resins containing 10% to 99.9% by weight of thermoset and/or thermoplastic epoxy resins, 0% to 89% by weight of elastomer, 0% to 50% by weight of curing agent and/or accelerator, and 0.1% to 80% by weight of diorganylphosphinic salts according to one or more of Claims 1 to 9.

The flame-retardant resins are thermoset and/or thermoplastic resins; these include polyesters, acrylates, epoxy resins, modified epoxy resins, polyimide, epoxide-polyphenylene oxide, epoxy cyanate esters, polyethylene naphthenate (PEN), liquid-crystal polymers (LCP), polytetrafluoroethylene (PTFE), polyether ketone (PEK), polyethylene terephthalate, phenol novolak, cresol novolak-type epoxy resin, bisphenol A epoxy resin, naphthalene epoxy resin, bisphenol F epoxy resin; phenol novolak-type epoxy resin; alicyclic epoxy resin; glycidyl ester epoxy resin; glycidylamine epoxy resin, hydantoin-type epoxy resin, novolak-type epoxy resin, alicyclic epoxy resin, glycidyl ester-type epoxy resin, glycidylamine epoxy resin, triazine-type epoxy resin, hydantoin epoxy resin; a polyester system, a polyurethane system, a polyamide system, a polystyrene system plus a thermoplastic elastomer; polyether ester amides, copolymer (polyester-polyol copolymer) of polyester polyol, diallylbisphenol A, epoxy-blended polyimide, cyanate esters, cyanate ester blends, polyphenylene oxide-epoxide blends, vinyl esters, tetraphenylolethane glycidyl ether, RTM-6 systems (resin transfer moulding) and/or cyanate esters.

The elastomers are preferably nitrile rubber, nitrile rubber having carboxyl groups and carboxyl-terminated butadiene-acrylonitrile, chloroprene rubber, butadiene rubber, acrylonitrile-butadiene rubber, styrene-butadiene rubber, an acrylic resin and thermoplastic polyimide and/or urethane-modified copolyester polymer.

The curing agents or accelerators are preferably triphenylphosphine, polyisocyanate, salts of a Lewis acid, amine curing agents, anhydride curing agents, admergic acid, modified/unmodified polyamides, modified polyaminoamides, tertiary amines, urea-formaldehyde condensation polymers, formaldehyde condensation polymers, phenol-formaldehyde condensation polymers, unmodified aliphatic, cycloaliphatic and/or aromatic anhydrides, modified acids and anhydrides, hydrazine derivatives, boron-halogen complexes, organometallic complexes, polythiols, phenols, free and/or blocked isocyanates, keto imines, imidazoles and/or derivatives thereof.

The invention also relates to the use of flame-retardant resins according to one or more of Claims 13 to 16 in solder resists, as coating for protective films, as adhesives for films, as adhesives for FPCs (flexible printed circuit boards), as heat-curable resin compositions, as resin lacquers, in prepregs, in metal-coated laminate, for multilayer printed circuit boards, for flexible flat cables, for flexible printed circuit boards, and adhesive films.

The invention likewise relates to the use of diorganylphosphinic salts according to one or more of Claims 1 to 9 for thermally curable solder resists, wherein the thermally curable solder resist comprises
A) 70% to 99.8% by weight of polyimide,
B) 0.1% to 30% by weight of curing agent and
C) 0.1% to 30% by weight of diorganylphosphinic salts according to at least one of Claims 1 to 9.

The invention additionally relates to flame-retardant thin polymer films, characterized in that the polymer comes from the group of polyether ether ketone, polyester, polyethylene terephthalate, polybutylene terephthalate and polyethylene naphthalate, polyamide, polyimide, polyamide imide, polyether imide, polyether sulfone ketone, polyether ether ketone, polyether sulfone sulfide, polyarylate, polyaramid, polycarbonate and/or polypropylene.

The invention also encompasses flame-retardant adhesives, characterized in that the adhesive comprises
a) 11 % to 99% by weight of solid or liquid epoxy resin
b) 2% to 89% by weight of nitrile rubber
c) 0.01% to 33% by weight of accelerator and
d) 14% to 57% by weight of diorganylphosphinic salts according to one or more of Claims 1 to 9.

The flame-retardant adhesive is preferably used for or in adhesive films, protective films, FPCs (flexible printed circuit boards), heat-curable resin compositions, resin lacquers, prepregs, in metal-coated laminate, multilayer printed circuit boards, flexible flat cables and/or flexible printed circuit boards.

The invention finally relates to an adhesive film, characterized in that it comprises
- 1% to 88% by weight of resin,
- 1% to 50% by weight of elastomer,
- 5% to 50% by weight of diorganylphosphinic salts according to one or more of Claims 1 to 9,
- 5% to 50% by weight of further flame retardants.

The flame-retardant resins according to the invention may, in the case of the glycidyl ester epoxy resins, be diglycidyl hexahydrophthalate, diglycidyl-3-methylhexahydrophthalic acid and/or diglycidyl hexahydroterephthalate; in the case of the glycidylamine epoxy resins they may be diglycidylaniline, diglycidyltoluidine, triglycidyl ether p-aminophenol, tetraglycidyl-m-xylylenediamine and/or tetraglycidylbis(aminomethyl)cyclohexane, and in the case of the polyether ester amides they may be thermoplastic polyamide esters as described, for instance, in KR101255897B1.

The curing agents/accelerators as usable in the epoxy resins according to the invention may, in the case of Lewis acid, be borofluoride of zinc, tin or nickel, or onium salts of hexafluoroantimonic acid; in the case of the amine curing agents they may be ethylenediamine, diethylenetriamine, triethylenetriamine, 3,3',5-trimethylhexamethylenediamine, 1,2-cyclohexyldiamine-1,2-diaminocyclohexane system, isophoronediamine, 4,4'-diamino-3,3'-dimethyldicyclohexylmethane, N-aminoethylpiperazine, m-phenylenediamine, m-xylenediamine, methylenedianiline, 4,4'-diaminodiphenyl sulfone and/or dicyandiamide; in the case of the anhydride curing agents they may be pyromellitic dianhydride, phthalic anhydride, tetrahydrophthalic anhydride, hexahydrophthalic anhydride and/or methylhexahydrophthalic anhydride.

The flame-retardant resins according to the invention find use in solder resists, as coating for protective films, adhesives for FPCs (flexible printed circuit boards), in heat-curable resin compositions, resin lacquers, in prepregs, in metal-coated laminate, multilayer printed circuit board, flexible flat cables, flexible printed circuit boards and adhesive films.

The diorganylphosphinic salts preferably correspond to the salts of diethylphosphinic acid, ethylbutylphosphinic acid, dibutylphosphinic acid, ethylhexylphosphinic acid, butylhexylphosphinic acid, ethyloctylphosphinic acid, sec-butylethylphosphinic acid, 1-ethylbutyl(butyl)phosphinic acid, ethyl-(1-methylpentyl)phosphinic acid, di-sec-butylphosphinic acid (di-(1-methylpropyl)phosphinic acid), propyl(hexyl)phosphinic acid, dihexylphosphinic acid, hexyl(nonyl)phosphinic acid, propyl(nonyl)phosphinic acid, dinonylphosphinic acid, dipropylphosphinic acid, butyl(octyl)phosphinic acid, hexyl(octyl)phosphinic acid, dioctylphosphinic acid, ethyl(cyclopentylethyl)phosphinic acid, butyl(cyclopentylethyl)phosphinic acid, ethyl(cyclohexylethyl)phosphinic acid, butyl(cyclohexylethyl)phosphinic acid, ethyl(phenylethyl)phosphinic acid, butyl(phenylethyl)phosphinic acid, ethyl-(4-methylphenylethyl)phosphinic acid, butyl-(4-methylphenylethyl)phosphinic acid, butylcyclopentylphosphinic acid, butylcyclohexylethylphosphinic acid, butylphenylphosphinic acid, ethyl-(4-methylphenyl)phosphinic acid and/or butyl-(4-methylphenyl)phosphinic acid.

The diorganylphosphinic salts according to the invention preferably further comprise telomers in amounts of
a) 60 to 99.8999 P% of diorganylphosphinic salts of the formula (I) and
b) 0.1% to 40 P% of telomers,
where the sum total of a) and b) is 100 P%, with the proviso that the diorganylphosphinic salts of the formula (I) and the telomers are different compounds.

The diorganylphosphinic salts according to the invention preferably comprise, as a further component, iron in the form of an iron-containing substance, especially fluorides, chlorides, bromides, iodides, iodate, perchlorate, oxides, hydroxides, peroxides, superoxides, sulfates, hydrogensulfates, sulfate hydrates, sulfites, peroxosulfates, nitrides, phosphides, nitrates, nitrate hydrates, nitrites, phosphates, peroxophosphates, phosphites, hypophosphites, pyrophosphates, carbonates, hydrogencarbonates, hydroxide carbonates, carbonate hydrates, silicates, hexafluorosilicates, hexafluorosilicate hydrates, stannates, borates, polyborates, peroxoborates, thiocyanates, cyanates, cyanides, chromates, chromites, molybdates, permanganates, formates, acetates, acetate hydrates, trifluoroacetate hydrates, propionates, butyrates, valerates, caprylates, oleates, stearates, oxalates, tartrates, citrates, basic citrates, citrate hydrates, benzoates, salicylates, lactates, lactate hydrates, acrylates, maleates, salts of succinic acid, salts of glycine, phenoxides, para-phenolsulfonates, para-phenolsulfonate hydrates, acetylacetonate hydrates, tannates, dimethyldithiocarbamates, trifluoromethanesulfonate, alkylsulfonates and/or aralkylsulfonates.

The diorganylphosphinic salts are preferably characterized in that they have
- a median particle size d₅₀ of 0.1 to 30 µm, preferably 0.5 to 3 µm,
- a particle size d₉₅ of 0.1 to 50 µm, preferably 1 to 20 µm,
- a particle size d_{99.5} of 0.5 to 100 µm, preferably 2 to 39 µm,
each measured by laser diffraction.

Particle sizes were determined by the laser diffraction method described in EP3270871B1.

The flame-retardant resins according to the invention can preferably be used as thermally curable solder resists.

With such thermally curable solder resists, it is easier to produce flexible printed circuits.

The solder resist protects circuits on the flexible printed circuit board. The solder resist according to the invention has good electrical properties, crease resistance, resistance to solder material, resistance to warpage, flame resistance, acid resistance, alkali resistance, good solvent resistance, low water absorption and low dielectric losses, all of which are a requirement in electronic high-frequency equipment.

Polyimide used in accordance with the invention for the solder resist is prepared from aliphatic diamine monomer containing 6 to 40 carbon atoms and aromatic dianhydride monomer selected from the group of 4,4-oxydiphthalic anhydride, or 2,3,3',4'-diphenyltetracarboxylic dianhydride or a combination thereof.

Particular preference is given to a 50 µm-thick polyethylene terephthalate film of the Tetron^{®} type from Teijin E. I. duPont de Nemours or a Kapton^{®} 100V polyimide film from E. I. du Pont de Nemours & Co.

The weight ratio of the polyimide and of the curing agent in the thermally curable solder resist is in the range from 20:1 to 20:30.

The flame-retardant resins according to the invention may preferably be used for protective films. The protective film here consists of thin polymer film and flame-retardant resin layer, and thus forms a polymer composite material layer. The resin layer comprises the flame retardant and is applied to this thin polymer film as a solution, for example, and the solvent is removed by evaporating.

The solvent needed for the purpose may be selected from the group of N-methylpyrrolidone, naphtha, xylene, 2-ethoxyethanol, methyl isobutyl ketone, methanol, ethanol, 1-propanol and 2-propanol, alicyclic hydrocarbon, alcohols, cyclohexanol, cyclohexane, methylcyclohexane, aromatic hydrocarbons such as toluene and xylene, acetone, methyl ethyl ketone, ketone, methyl isobutyl ketone, ethyl acetate, dimethyl carbonate, diethyl carbonate and gamma-butyrolactone, tetrahydrofuran, acetonitrile, dimethylformamide, dimethylacetamide and/or N-methylpyrrolidone.

The resins and resin compositions according to the invention are suitable for the production of adhesive films for flat cables. These contain, for example:

| | |
|---|---|
| Polybutylene terephthalate (resin used in accordance with the invention) | 16% by weight |
| Urethane-modified copolyester polymer (elastomer) | 16% by weight |
| Melamine cyanurate (flame retardant) | 30% by weight |
| Diorganylphosphinic salts according to one or more of Claims 1 to 9 | 30% by weight |

An adhesive film is composed of the aforementioned resin or resin composition applied to the base film. The thickness of the resin according to the invention is 10 to 100 µm.

In the uses mentioned here, preference is given to using further additives, these being antioxidants, UV stabilizers, gamma ray stabilizers, hydrolysis stabilizers, antistats, emulsifiers, nucleating agents, plasticizers, processing auxiliaries, impact modifiers, dyes, pigments and others.

Preferred further additives are oxygen compounds of silicon, silicates, zeolites and silicas, glass, glass ceramic or ceramic powders, magnesium compounds, magnesium hydroxide, hydrotalcites, magnesium carbonates or magnesium calcium carbonates, metal carbonates of metals of the second main group of the Periodic Table, zinc and/or aluminium compounds.

Particularly preferred further additives are zinc compounds, e.g. zinc oxide, zinc hydroxide, zinc oxide hydrate, zinc carbonate, zinc stannate, zinc hydroxystannate, basic zinc silicate, zinc phosphate, zinc borate, zinc molybdate and/or zinc sulfides.

Further suitable additives are those from the group of the carbodiimides and/or (poly)isocyanates.

Preferred further additives are, for instance, sterically hindered phenols (e.g. Hostanox^{®} OSP 1), sterically hindered amines and light stabilizers (e.g. Chimasorb^{®} 944, Hostavin^{®} products), phosphonites and antioxidants (e.g. Sandostab^{®} P-EPQ from Clariant) and separating agents (Licomont^{®} products from Clariant).

Preferred further fillers include oxygen compounds of silicon, magnesium compounds, for example metal carbonates of metals of the second main group of the Periodic Table, magnesium oxide, magnesium hydroxide, hydrotalcites, dihydrotalcite, magnesium carbonates or magnesium calcium carbonates, calcium compounds, e.g. calcium hydroxide, calcium oxide, hydrocalumite, aluminium compounds, e.g. aluminium oxide, aluminium hydroxide, boehmite, gibbsite or aluminium phosphate, red phosphorus, zinc compounds or aluminium compounds.

Preferred further fillers are glass beads.

More particularly, in the aforementioned uses,

| | |
|---|---|
| 0.0001 % to 99.8% by weight | of diorganylphosphinic salts according to one or more of Claims 1 to 9, |
| 0.1% to 40% by weight | of synergists and |
| 0.1% to 40% by weight | of additives are used, |

where the sum total of the components is 100% by weight.

The polymers preferably originate from the group of the thermoplastic polymers such as polyester, polystyrene or polyamide, and/or the thermoset polymers.

The polymers are preferably polyureas, polyimides, polyamide imides, polyether imides, polyester imides, polyhydantoins and polybenzimidazoles.

The polymers are preferably crosslinked epoxy resins which derive from aliphatic, cycloaliphatic, heterocyclic or aromatic glycidyl compounds, for example products of bisphenol A diglycidyl ethers, bisphenol F diglycidyl ethers, which are crosslinked by means of customary hardeners, for example anhydrides or amines, with or without accelerators.

Glass fibres are preferably used as reinforcing materials.

### Measurement of dielectric loss

Dielectric loss was measured with a ZVB20 network analyser from Rohde & Schwarz Co. at 1 gigahertz (GHz).

### Production, processing and testing of flame-retardant polymer moulding compounds and polymer mouldings

### Example 1 Adhesives for flexible printed circuit boards

The formulation is produced by, in a first stage, firstly mixing the following components and subjecting them to wet grinding in a mill for 4 hours:
A 50 g of liquid epoxy resin of the bisphenol A epoxy (Epon^{®} 828) bisphenol A-epichlorohydrin type with a molecular weight of 380;
B dimethylbenzyl-(4-methoxybenzyl)ammonium hexafluoroantimonate
C 100 g of carboxyl-terminated butadiene-acrylonitrile/butadiene rubber
D 20 g of aluminium hydroxide
E 50 g of dialkylphosphinic salt 1

In a stage 2, an accelerator solution is mixed from:

| | |
|---|---|
| 2 g of | dimethylbenzyl-(4-methoxybenzyl)ammonium hexafluoroantimonate |
| 12 g of | methyl ethyl ketone |

In stage 3, a solution from stages 1 and 2 is mixed in a ratio of 1:1 for one hour in order to obtain an adhesive for a flexible printed circuit board. The printed circuit board contained the following layers:
A polyimide film, the adhesive according to the invention for the flexible printed circuit board, a copper foil, a solder resist and a coverlay.

The dielectric loss of the flexible printed circuit board was measured for diorganylphosphinic salts with various Hausner factors. In the case of the diorganylphosphinic salts from Examples 1 and 2 that are used in accordance with the invention and have a ratio of tamped density to bulk density according to the invention, the dielectric loss of the flexible printed circuit board is lower than in the case of the diorganylphosphinic salt used in Example 3 that has a ratio of tamped density to bulk density not according to the invention.

**Table: Testing of the adhesives according to the invention for flexible printed circuit boards**

| Example | | Hausner factor | Dielectric loss |
|---|---|---|---|
| 1 | Dialkylphosphinic salt 1 | 1.34 | 0.0025 |
| 2 | Dialkylphosphinic salt 2 | 1.29 | 0.003 |
| 3 | Dialkylphosphinic salt 3 | 1.05 | 0.04 |

| | | | |
|---|---|---|---|
| Diorganylphosphinic salt 1: Exolit^{®} OP 945 from Clariant Diorganylphosphinic salt 2: Exolit^{®} OP 930 from Clariant Diorganylphosphinic salt 3: Exolit^{®} OP 950 from Clariant | | | |

### Example 4 Production of a thermally curable polyimide-based solder resist

25 g of aliphatic dianiline monomer containing a carbon chain having 36 carbon atoms and 12 g of 4,4'-oxydiphthalic anhydride were mixed in an aprotic solvent composed of 60 g of N-methylpyrrolidone and 6.5 g of naphtha to give a first solution, which was kept at 70°C for 1 hour. Then 1 g of 3,5-diaminobenzoic acid was added and the mixture was kept at 70°C for 1 hour, then 2.5 g of trimellitic anhydride was added and the mixture was kept at 70°C for 1 h. Then 0.2 g of triphenylphosphine dissolved in 15 g of toluene was added, and the mixture was heated to 150°C for 3 h. Subsequently, toluene and triphenylphosphine were separated from the polyimide obtained.

40 g of the polyimide thus obtained was mixed with 0.25 g of triphenylphosphine, 0.15 g of defoamer, 4 g of diorganylphosphinic salt 1 and 3.6 g of phenol novolak epoxy resin to give a thermally curable solder resist.

70 grams per square metre of this solder resist was applied to a polyimide film, specimens of length 127 mm and width 12.7 mm were produced, and a UL-94 classification of V-0 was achieved in a flame retardancy test.

### Example 5 Adhesive film for flexible flat cables

First of all, a flame-retardant resin according to the invention was produced from 50% by weight of TPAE32 (polyether ester amide, Fuji Chemicals) and 50% by weight of diorganylphosphinic salt 2.

200 parts of this flame-retardant resin were dissolved in 100 parts of acetone and 400 parts of 2-propanol.

70 grams of resin (in the form of this solution) per square metre was applied to a polyimide film, specimens of length 127 mm and width 12.7 mm were produced, and a UL-94 classification of V-0 was achieved in a flame retardancy test.

### Example 6 Adhesive film for flexible flat cables

49.1 g of EOCN-104S (epoxy resin of the cresol novolak type, produced by Nippon Kayaku Co., Ltd.), 60.1 g of HP-350 (aluminium hydroxide from Showa Denko KK) and SFP-130MC (spherical silica from Denki Kagaku Kogyo Co., Ltd.) were added to 100 g of methyl ethyl ketone and dispersed on a three-roll mill. Then 15.3 g of diorganylphosphinic salt 1 was dispersed in 30 g of methanol and added. Thereafter, 50.9 g of EOCN-104S, 5 g of Adeka EH-3636 AS curing agent (dicyandiamide curing agent from ADEKA Corporation) and 100 g of methyl ethyl ketone were added and dispersed, and hence a resin lacquer was produced (WO2016121750A1).

150 grams per square metre of this solution was applied to a polyimide film, specimens of length 127 mm and width 12.7 mm were produced, and a UL-94 classification of V-0 was achieved in a flame retardancy test.

### Example 7 Laminate

44% by weight of Araldit^{®} M9512 (a multifunctional epoxy resin, Huntsman), 23% by weight of Kaneka^{®} MX 153 (core-shell rubber mixed with bisphenol resin, from Kaneka), 8% by weight of CHS Epoxy 130T (solid type 3 epoxy resin, Spolchemie), 20% by weight of diorganylphosphinic salt 2, 6% by weight of Omicure^{®} U52M (urea, Alzchem) and 6.5% by weight of adipic dihydrazide (from Geniechem) were mixed to give a resin.

A carbon fibre weave of the AS4C-3K type (basis weight 220 g/m², from Hexcel) was impregnated with the resin, and hence a prepreg with a resin content of 45% was obtained. Eight plies of this prepreg were pressed to a laminate at 125°C (analogously to US-2015/0344649). Specimens of length 127 mm and width 12.7 mm were produced, and a UL-94 classification of V-0 was achieved in a flame retardancy test.

### Example 8 Epoxy resin for composite use

An epoxy resin for composite use contains:

| | |
|---|---|
| 40% by weight | of a reaction product of halogen-free bisphenol F epoxy resin with dihydro-oxa-phosphaphenanthrene oxide (DOPO), |
| 6% by weight | of a trifunctional epoxide diluent (DEN428, Dow Chemicals), |
| 9% by weight | of a liquid bisphenol A diglycidyl ether (Beckopox^{®} EP 140, Solvay) |
| 5% by weight | of dicyandiamide (Dyhard^{®} 100S, AlzChem) |
| 2% by weight | of uron (Dyhard^{®} UR500, AlzChem) |
| 7% by weight | of rubber mixed with bisphenol resin (Kaneka^{®} MX 153, from Kaneka) |
| 3% by weight | of carboxy-terminated butadiene-acrylonitrile rubber (Hypro^{®} 1300X8, CVC Thermoset Specialties) |
| 6% by weight | of phenoxy resin (Phenoxy YP50, from Kukdo) |
| 18% by weight | of diorganylphosphinic salt 1 |
| 3.5% by weight | of zinc borate (Firebrake^{®} 500, from Rio Tinto Minerals) |
| 0.5% by weight | of hydrophobic fumed silica (Aerosil, Evonik) |

The epoxy resin serves for production of polymer composites with glass fibre or carbon fibre reinforcing materials.

Glass fibre mats as reinforcing material were used to produce sheets of thickness 1.6 mm, and specimens of length 127 mm and width 12.7 mm that were cut out of these achieved a UL-94 classification of V-0 in the flame retardancy test.

## Claims

1. Diorganylphosphinic salts having a ratio of tamped density to bulk density of 1.19 to 3.

2. Diorganylphosphinic salts according to Claim 1, **characterized in that** they have a ratio of tamped density to bulk density of 1.2 to 2.

3. Diorganylphosphinic salts according to Claim 1 or 2, **characterized in that** they have a ratio of tamped density to bulk density of 1.25 to 1.5.

4. Diorganylphosphinic salts according to at least one of Claims 1 to 3, which conform to the formula (I) 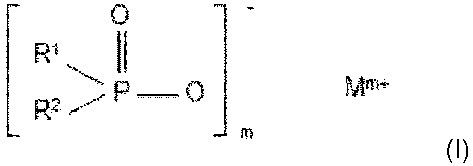 in which
R¹ and R² are the same or different and are C₁-C₁₈-alkyl in linear, branched or cyclic form, C₆-C₁₈-aryl, C₇-C₁₈-arylalkyl, and/or C₇-C₁₈-alkylaryl,
M is Mg, Ca, Al, Sb, Sn, Ge, Ti, Zn, Fe, Zr, Ce, Bi, Sr, Mn, Li, Na, K, a protonated nitrogen base and/or a lanthanoid;
m is 1 to 4;
n is 1 to 4.

5. Diorganylphosphinic salts according to at least one of Claims 1 to 4, **characterized in that** R¹, R² in formula (I) are the same or different and are methyl, ethyl, n-propyl, isopropyl, n-butyl, tert-butyl, n-pentyl, hexyl, and/or phenyl.

6. Diorganylphosphinic salts according to at least one of Claims 1 to 5, **characterized in that** they further comprise telomers, where the telomers are ethylbutylphosphinic acid, dibutylphosphinic acid, ethylhexylphosphinic acid, butylhexylphosphinic acid, ethyloctylphosphinic acid, sec-butylethylphosphinic acid, (1-ethylbutyl)butylphosphinic acid, ethyl-(1-methylpentyl)phosphinic acid, di-sec-butylphosphinic acid (di-1-methylpropylphosphinic acid), propyl(hexyl)phosphinic acid, dihexylphosphinic acid, hexyl(nonyl)phosphinic acid, dinonylphosphinic acid, and/or salts thereof with the metals Mg, Ca, Al, Sb, Sn, Ge, Ti, Zn, Fe, Zr, Ce, Bi, Sr, Mn, Li, Na, K and/or the lanthanoids, and/or are a protonated nitrogen base, and the telomers are different from the diorganylphosphinic salts of the formula (I).

7. Diorganylphosphinic salts according to at least one of Claims 1 to 6, **characterized in that** they comprise, as a further component, iron in the form of an iron-containing substance, where the amount of iron-containing substance is 0.0001 % to 10% by weight of the total mixture, and the iron-containing substance is iron(II) and/or iron(III) phosphite, phosphate, diethylphosphinate, dipropylphosphinate, n-butylethylphosphinate, sec-butylethylphosphinate, hexylethylphosphinate, dibutylphosphinate, monoethylphosphinate, monopropylphosphinate, monobutylphosphinate, mono-n-butylphosphinate, mono-sec-butylphosphinate, monohexylphosphinate, monooctylphosphinate, ethylphosphonate, propylphosphonate, n-butylphosphonate, sec-butylphosphonate, hexylphosphonate and/or octylphosphonate.

8. Diorganylphosphinic salts according to at least one of Claims 1 to 7, **characterized in that** they comprise, as a further component, melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphates, melam polyphosphates, melem polyphosphates and/or melon polyphosphates; or melamine condensation products such as melam, melem and/or melon; or oligomeric esters of tris(hydroxyethyl) isocyanurate with aromatic polycarboxylic acids, benzoguanamine, tris(hydroxyethyl) isocyanurate, allantoin, glycoluril, melamine, melamine cyanurate, urea cyanurate, dicyandiamide and/or guanidine; or nitrogen-containing phosphates of the formula (NH₄)_{y}H_{3-y}PO₄ or (NH₄PO₃)_{z} with y = 1 to 3 and z = 1 to 10 000; or aluminium phosphites; silicates, carbonates, monoalkylphosphinates, monoarylphosphinates, zeolites, silicas, ceramic powder, zinc compounds, for example zinc borate, alkali metal carbonate (potassium carbonate), zinc carbonate, zinc stannate, zinc hydroxystannate, zinc phosphate, zinc sulfide, zinc oxide, zinc hydroxide, tin oxide hydrate, basic zinc silicate, zinc molybdate; magnesium hydroxide, hydrotalcite, magnesium carbonate, calcium magnesium carbonate; salts of ethylphosphonic acid, of propylphosphonic acid, of butylphosphonic acid, of n-butylphosphonic acid, of sec-butylphosphonic acid, of hexylphosphonic acid and/or of octylphosphonic acid, where the amount thereof is 1% to 40% of the overall mixture.

9. Diorganylphosphinic salts according to at least one of Claims 1 to 8, **characterized in that** they have
- a median particle size d₅₀ of 0.1 to 30 µm, measured by laser diffraction,
- a particle size d₉₅ of 0.1 to 50 µm, measured by laser diffraction,
- a particle size d_{99.5} of 0.5 to 100 µm, measured by laser diffraction,
- a bulk density of 50 to 600 g/l,
- a tamped density of 100 g/l to 800 g/l,
- an angle of repose of 5 to 50 degrees,
- a BET surface area of 1 to 50 m²/g,
- L color values of 85 to 99.9,
- a color values of -4 to +9 and/or
- b color values of -2 to +6.

10. Use of diorganylphosphinic salts according to at least one of Claims 1 to 9 for further syntheses, as binder, as crosslinker or accelerator in the curing of epoxy resins, polyurethanes and unsaturated polyester resins, as polymer stabilizers, as crop protection agents, as sequestrants, as mineral oil additive, as anticorrosive, in washing and cleaning composition applications and in electronics applications; as or in flame retardants for clearcoats and intumescent coatings, as flame retardants for wood and other cellulose-containing products, as reactive and/or nonreactive flame retardant for polymers, for production of flame-retardant adhesives, for production of flame-retardant polymer moulding compounds, for production of flame-retardant polymer mouldings, films, filaments and/or fibres, and/or for imparting flame retardancy to polyester and pure cellulose and cellulose blend fabrics by impregnation, and in or for solder resists.

11. Flame-retardant thermoplastic or thermoset polymer moulding compound or polymer mouldings, films, filaments and/or fibres containing 0.5% to 45% by weight of diorganylphosphinic salts according to one or more of Claims 1 to 9, 0.5% to 95% by weight of thermoplastic or thermoset polymer or mixtures thereof, 0% to 55% by weight of additives and 0% to 55% by weight of filler or reinforcing materials, where the sum total of the components is 100% by weight.

12. Flame-retardant thermoplastic or thermoset polymer moulding compound or polymer mouldings, films, filaments and/or fibres according to Claim 11, **characterized in that** the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/ acrylonitrile-butadiene-styrene) or PPE/HIPS (polyphenylene ether/HI polystyrene) polymer type, and/or thermoset polymers of the unsaturated polyester or epoxy resin type.

13. Flame-retardant resins containing 10% to 99.9% by weight of thermoset and/or thermoplastic epoxy resins, 0% to 80% by weight of elastomer, 0% to 50% by weight of curing agent and/or accelerator, and 0.1% to 80% by weight of diorganylphosphinic salts according to one or more of Claims 1 to 9.

14. Flame-retardant resins according to Claim 13, **characterized in that** the thermoset and/or thermoplastic resins are polyesters, acrylates, epoxy resins, modified epoxy resins, polyimide, epoxide-polyphenylene oxide, epoxy cyanate esters, polyethylene naphthenate (PEN), liquid-crystal polymers (LCP), polytetrafluoroethylene (PTFE), polyether ketone (PEK), polyethylene terephthalate, phenol novolak, cresol novolak-type epoxy resin, bisphenol A epoxy resin, naphthalene epoxy resin, bisphenol F epoxy resin; phenol novolak-type epoxy resin; alicyclic epoxy resin; glycidyl ester epoxy resin; glycidylamine epoxy resin, hydantoin-type epoxy resin, novolak-type epoxy resin, alicyclic epoxy resin, glycidyl ester-type epoxy resin, glycidylamine epoxy resin, triazine-type epoxy resin, hydantoin epoxy resin; a polyester system, a polyurethane system, a polyamide system, a polystyrene system plus a thermoplastic elastomer; polyether ester amides, copolymer (polyester-polyol copolymer) of polyester polyol, diallylbisphenol A, epoxy-blended polyimide, cyanate esters, cyanate ester blends, polyphenylene oxide-epoxide blends, vinyl esters, tetraphenylolethane glycidyl ether, RTM-6 systems (resin transfer moulding) and/or cyanate esters.

15. Flame-retardant resins according to Claim 13 or 14, **characterized in that** the elastomers are nitrile rubber, nitrile rubber having carboxyl groups and carboxyl-terminated butadiene-acrylonitrile, chloroprene rubber, butadiene rubber, acrylonitrile-butadiene rubber, styrene-butadiene rubber, an acrylic resin and thermoplastic polyimide and/or urethane-modified copolyester polymer.

16. Flame-retardant resins according to one or more of Claims 13 to 15, **characterized in that** the curing agents or accelerators are triphenylphosphine, polyisocyanate, salts of a Lewis acid, amine curing agents, anhydride curing agents, admergic acid, modified/unmodified polyamides, modified polyaminoamides, tertiary amines, urea-formaldehyde condensation polymers, formaldehyde condensation polymers, phenol-formaldehyde condensation polymers, unmodified aliphatic, cycloaliphatic and/or aromatic anhydrides, modified acids and anhydrides, hydrazine derivatives, boron-halogen complexes, organometallic complexes, polythiols, phenols, free and/or blocked isocyanates, keto imines, imidazoles and/or derivatives thereof.

17. Use of flame-retardant resins according to one or more of Claims 13 to 16 in solder resists, as coating for protective films, as adhesives for films, as adhesives for FPCs (flexible printed circuit boards), as heat-curable resin compositions, as resin lacquers, in prepregs, in metal-coated laminate, for multilayer printed circuit boards, for flexible flat cables, for flexible printed circuit boards, and adhesive films.

18. Use of diorganylphosphinic salts according to one or more of Claims 1 to 9 for thermally curable solder resists, wherein the thermally curable solder resist comprises
A) 70% to 99.8% by weight of polyimide,
B) 0.1% to 30% by weight of curing agent and
C) 0.1% to 30% by weight of diorganylphosphinic salts according to at least one of Claims 1 to 9.

19. Flame-retardant thin polymer films, **characterized in that** the polymer comes from the group of polyether ether ketone, polyester, polyethylene terephthalate, polybutylene terephthalate and polyethylene naphthalate, polyamide, polyimide, polyamide imide, polyether imide, polyether sulfone ketone, polyether ether ketone, polyether sulfone sulfide, polyarylate, polyaramid, polycarbonate and/or polypropylene.

20. Flame-retardant adhesives, **characterized in that** the adhesive comprises
- 11% to 99% by weight of solid or liquid epoxy resin
- 2% to 89% by weight of nitrile rubber
- 0.01% to 33% by weight of accelerator and
- 14% to 57% by weight of diorganylphosphinic salts
according to one or more of Claims 1 to 9.

21. Flame-retardant adhesive according to Claim 20, **characterized in that** it is used for or in adhesive films, protective films, FPCs (flexible printed circuit boards), heat-curable resin compositions, resin lacquers, prepregs, in metal-coated laminate, multilayer printed circuit boards, flexible flat cables and/or flexible printed circuit boards.

22. Adhesive film, **characterized in that** it comprises
- 1% to 88% by weight of resin,
- 1% to 50% by weight of elastomer,
- 5% to 50% by weight of diorganylphosphinic salts
according to one or more of Claims 1 to 9 and
- 5% to 50% by weight of further flame retardants.
